# EUROPÄISCHE PATENTSCHRIFT

(11) **EP 3 439 125 B1**
(45) Veröffentlichungstag und Bekanntmachung des Hinweises auf die Patenterteilung: **12.02.2020**
(21) Anmeldenummer: 18179435.5
(22) Anmeldetag: 25.06.2018
(51) Int. Cl.: H02B 1/32, H02B 1/01, F16B 7/04

(54) **SCHALTSCHRANK MIT RAHMEN**
SWITCHGEAR CABINET WITH FRAME
ARMOIRE ÉLECTRIQUE POURVUE DE CADRE

(30) Priorität: 31.07.2017 DE 102017117312
(43) Veröffentlichungstag der Anmeldung: 06.02.2019
(73) Patentinhaber: Eldon Holding Aktiebolag, 571 83 Nässjö (SE)
(72) Erfinder: Filea, Adrian, 507165 Brasov (RO)
(74) Vertreter: Grünecker Patent- und Rechtsanwälte PartG mbB

(56) Entgegenhaltungen:
- EP-A2- 2 330 703
- DE-A1- 2 239 370
- DE-A1- 10 328 406
- DE-C1- 19 507 437
- DE-T2- 69 500 153
- FR-A1- 2 450 993

## Beschreibung

Die vorliegende Erfindung betrifft einen Schaltschrank mit einem Rahmen, welcher vertikale Rahmenprofile und mindestens eine zwischen den Rahmenprofilen angeordnete Traverse umfasst, wobei die Rahmenprofile Befestigungsöffnungen aufweisen, an denen die Traverse befestigbar ist. Insbesondere betrifft die Erfindung einen Schaltschrank nach dem Oberbegriff des unabhängigen Anspruchs 1.

Ein Schaltschrank entsprechend dem Oberbegriff des unabhängigen Anspruchs 1 ist aus der DE 103 28 406 A1 bekannt. Ein weiterer Schaltschrank aus dem Stand der Technik ist aus der DE 10 136 680 A1 bekannt. Dieser Schaltschrank weist einen Rahmen auf, welcher horizontale und vertikale Profile umfasst. Die vertikalen Profile weisen Befestigungsöffnungen auf, an denen beim Aufbau des Rahmens die horizontalen Profile befestigt werden. Zu den horizontalen Profilen gehört mindestens eine Traverse, welche zwischen den vertikalen Profilen befestigbar ist. An den Enden der zu befestigenden Traverse ist jeweils eine Halterung vorgesehen, die mit Schrauben an den vorgesehenen Befestigungsöffnungen der vertikalen Profile befestigt ist. Die befestigte Traverse erhöht die Rahmenfestigkeit und ermöglicht die stabile Lagerung weiterer Subsysteme in dem Schaltschrank. Der Zusammenbau des Schaltschrankes nach dem Stand der Technik erfordert einen erhöhten technischen und zeitlichen Aufwand seitens des Monteurs.

Es ist daher Aufgabe der vorliegenden Erfindung, einen Schaltschrank zur Verfügung zu stellen, dessen Rahmen mit reduziertem Aufwand und erhöhter Zeiteffizienz um eine Traverse erweitert oder vervollständigt werden kann.

Diese Aufgabe wird durch einen Schaltschrank mit einem Rahmen mit den Merkmalen des unabhängigen Anspruchs 1 gelöst. Bevorzugte Ausführungsformen und Ausgestaltungen der Erfindung sind in den abhängigen Ansprüchen angegeben.

Beim Aufbau des Schaltschrankes kann die Traverse mithilfe von mindestens einer an ihr schwenkbar gelagerten Halterung mit Vorsprüngen zwischen starr gelagerten, festen Rahmenprofilen befestigt werden. Dadurch lässt sich die horizontal projizierte Länge der Traverse mit den Vorsprüngen beim Positionieren zwischen benachbarten Rahmenprofilen reduzieren. Um die horizontal projizierte Länge der Traverse mit den Vorsprüngen zu erhöhen, damit die Traverse im eingebauten Zustand mit den Vorsprüngen in Befestigungsöffnungen eingreift, wird die Halterung wieder in die Befestigungsposition zurüsckgeschwenkt.

Die Schwenkbarkeit der Halterung ermöglicht soweit die Positionierung der Traverse zwischen den Rahmenprofilen und den Eingriff der Vorsprünge in die Befestigungsöffnungen.

In einer vorteilhaften Ausgestaltung sind Befestigungsöffnungen als Lochraster ausgebildet. Damit ergeben sich vorteilhafte Befestigungspositionen, die je nach Bedarf angepasst werden können.

Vorteilhafterweise kann am zweiten Ende der Traverse eine zweite Halterung vorgesehen sein. Damit können auf einfache Weise am zweiten Ende der Traverse Vorsprünge angeordnet werden, um die Traverse an beiden Enden stabil in den Befestigungsöffnungen zu lagern.

Vorteilhafterweise haben beide Halterungen zwei Bohrungen, an denen sie gelagert werden können, eine Bohrung am freien Ende der Halterung zur schwenkbaren Lagerung und eine mittlere Bohrung zur starren Lagerung an einem Langloch der Traverse. Damit können beide Halterungen einem ähnlichen Bautyp zugehören, wodurch der Zusammenbau des Schaltschrankes vereinfacht wird.

Die Vorsprünge können vorteilhafterweise hakenförmig sein, was das Einhaken an der Kante innerhalb eines Loches ermöglicht und für eine erhöhte Stabilität der Traversen-Lagerung sorgt.

Das freie Ende der hakenförmige Vorsprünge weist vorteilhafterweise beim Einbauen der Traverse in die Richtung, aus der sie eingebaut wird, um ein Verhaken der Vorsprünge an den Rahmenprofilen zu vermeiden.

Die schwenkbare Halterung ist in einer vorteilhaften Ausgestaltung gegen Verschwenken gesichert. Damit kann im eingebauten Zustand keine weitere Schwenkung der Halterung die Traverse aus den Befestigungsöffnungen bewegen.

In einer vorteilhaften Ausgestaltung wird die Traverse gegen Verschwenken mit einem Sicherungsclips gesichert, dass in eine entsprechende Öffnung durch die Halterung und durch die Traverse eingesetzt wird. Damit kann im eingebauten Zustand vermieden werden dass ein weiteres Schwenken zwischen der Traverse und der Halterung nach dem Einbau der Traverse stattfindet.

Vorteilhafterweise ist die Traverse im Bereich der Lagerung der Halterung als U-Profil ausgebildet werden. Damit entsteht ein Einbauraum für die Lagerung der Halterung an der Traverse.

Die schwenkbare Halterung wird vorteilhafterweise zwischen den Schenkeln des U-Profils der Traverse schwenkbar gelagert. Somit benötigt die Lagerung der Halterung wenig Einbauraum und gewährleistet ein freies Schwenken der Halterung beim einbauen der Traverse zwischen den Rahmenprofilen.

In einer vorteilhaften Ausgestaltung bildet der Verbindungssteg des U-Profils im Einbauzustand der Traverse einen Anschlag gegen ein Verschwenken der Halterung. Diese Maßnahme begrenzt den Schwenkbereich der Halterung und trägt zu einer Erhöhung der Stabilität der Traverse im eingebauten Zustand bei.

Im Folgenden werden Ausführungsbeispiele und Ausgestaltungen der Erfindung anhand einer Zeichnung näher erläutert. Es zeigen:
- Figur 1:: einen Schaltschrank;
- Figur 2:: einen Rahmen für einen Schaltschrank;
- Figur 3:: ein Ende einer Traverse beim Einbau;
- Figur 4:: eine Traverse; und
- Figur 5:: eine Traverse mit einer verschwenkten Halterung.

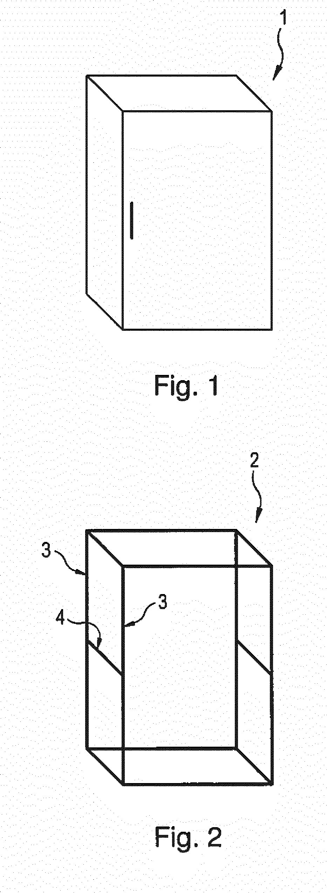

Figuren 1 - 3 zeigen einen Schaltschrank 1 mit einem Rahmen 2, welcher Rahmenprofile 3 und mindestens eine Traverse 4 umfasst.

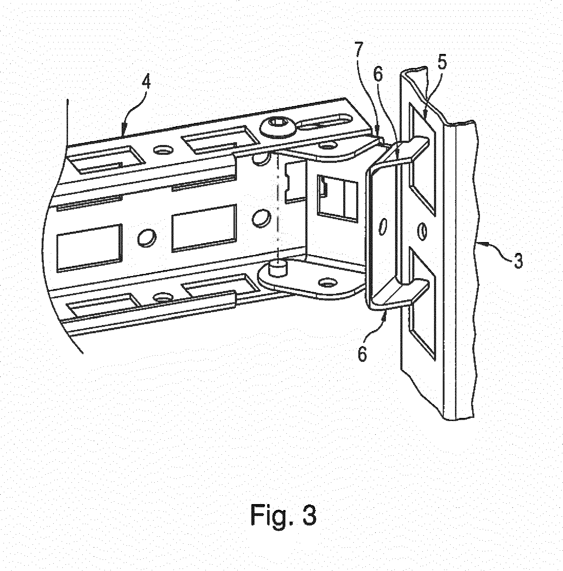

Figur 1 zeigt schematisch einen erfindungsgemäßen Schaltschrank 1. Figur 2 zeigt schematisch einen Rahmen 2 für den Schaltschrank 1. Der Rahmen 2 umfasst Rahmenprofile 3 und mindestens eine Traverse 4. Die Traverse 4 ist zur Befestigung an ihren beiden Enden zwischen den Rahmenprofilen 3 vorgesehen. Figur 3 zeigt einen Abschnitt 4 der Traverse 4, die mit einem Rahmenprofil 3 in Eingriff gebracht wird. Dazu weist das Rahmenprofil 3 Befestigungsöffnungen 5, in welche die Traverse 4 in einem eingebauten Zustand mit Vorsprüngen 6 eingreift. Bei den Befestigungsöffnungen in jedem Rahmenprofil 3 handelt es sich jeweils um ein Lochraster. Damit sind vorteilhafte Befestigungspositionen möglich, beispielsweise je nach benötigter Höhe für ein aufzuhängendes System.

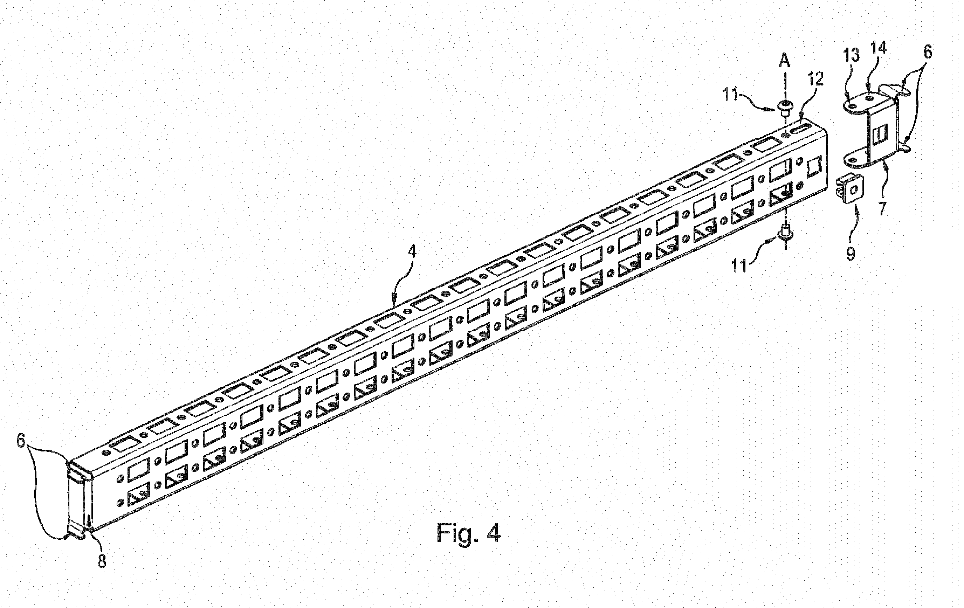

Figur 4 zeigt die Traverse 4 mit zu lagernden Vorsprüngen 6 an Halterungen 7,8. Da die Befestigungsöffnungen 5 auf einander zugewandte Seiten benachbarter Rahmenprofile 3 angeordnet sind, werden die Vorsprünge 6 an der schwenkbaren Halterung 7 und der starren Halterung 8 angeordnet.

Die Halterung 7 wird schwenkbar um eine Schwenkachse A gelagert. Dies wird ermöglicht, indem an jedem der zwei Schenkel der Halterung 7 eine Bohrung 13 am freien Ende für eine schwenkbare Lagerung an den Bohrungen, die die Achse A in der Traverse 4 durchgeht, ausgebildet wird. Die Halterung 8 wird am anderen Ende der Traverse 4 starr ausgebildet. In einer vorteilhaften, nicht gezeigten Ausführungsform können die Halterungen 7,8 spiegelbildähnlich ausgebildet sein und jeweils mit Schrauben 11 an der Traverse 4 schwenkbar (Halterung 7) und starr (Halterung 8) gelagert werden. Bei einer Lagerung der Halterung 8 an einer Bohrung 14 an einem entsprechend ausgebildeten Langloch 12 der Traverse 4 ist kein Verschwenken möglich, sie ist also starr. Mit jeweils einer Halterung 7 bzw. 8 an jedem Ende der Traverse 4, können die Vorsprünge 6 auf einfacher Weise an ihr angebracht werden.

Mit einer schwenkbaren Halterung 7 und einer starren Halterung 8 kann der Einbau der Traverse 4 schnell und einfach erfolgen, indem die Halterung 8 in die Befestigungsöffnungen 5 eingesetzt wird, und die Halterung 7 so geschwenkt wird, dass die Vorsprünge 6 beim Einsetzen der Traverse 4 zwischen den benachbarten Rahmenprofilen 3 in die Befestigungsöffnungen 5 eingreifen. Die Vorsprünge 6 werden hakenförmig ausgebildet, so dass im einge-bauten Zustand sie sich an den Kanten der Befestigungsöffnungen 5 leicht einhaken. Vorteilhafterweise weist das freie Ende der Vorsprünge 6 in die Richtung aus der die Traverse eingebaut wird. Wird die Traverse 4 beispielsweise aus dem Inneren des Schaltschrankes 1 eingebaut und das freie Ende der hakenförmige Vorsprünge 6 zeigt ins Innere des Schaltschrankes 1, so wird ein Verhaken der Traverse 4 beim Einbauen in den Rahmen 2 vermieden. Dies ist besonders vorteilhaft wenn der Schaltschrank 1 bereits fertiggebaut worden ist, und die Traverse 4 zwischen den Rahmenprofilen 3 aus dem Inneren des Schrankes eingebaut werden soll. Damit an beiden Enden der Traverse 4 das freie Ende beider Vorsprüngen in dieselbe Richtung zeigen, müssen die Vorsprünge 6 an jedem Ende der Traverse 4 spiegelbildähnlich um die Normalebene der Längsachse der Traverse 4 ausgebildet sein.

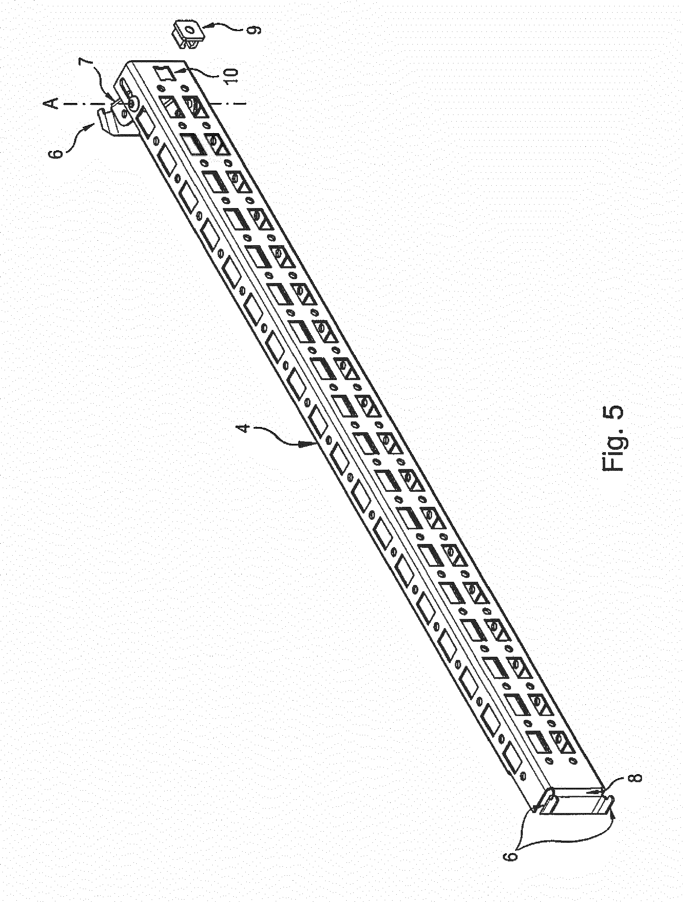

Figur 5 zeigt die Traverse 4 mit den Halterungen 7,8. Die Halterung 7 ist schwenkbar um die Traverse 4 gelagert und die Halterung 8 ist starr gelagert. Damit die Halterung 7 im eingebauten Zustand nicht verschwenkt wird und die Traverse 4 nicht ausschwenkt, wird die schwenkbar gelagerte Halterung 7 gegen Verschwenken gesichert. Ein Verschwenken der Halterung 7 im eingebauten Zustand kann beispielsweise mit einem Sicherungsclip 9 vermieden werden, der in eine an der Schwenkachse A benachbarte Öffnung 10 durch die Traverse 4 und die Halterung 7 fluchtend eingesetzt wird.

Damit die Halterung 7 einen möglichst geringen Einbauraum innerhalb des Rahmens 2 für den Schaltschrank 1 benötigen, ist es vorteilhaft wenn die Traverse 4 in einem bestimmten Bereich an ihren Enden einen U-Profil aufweist, so dass die Halterung 7 in diesen Bereichen gelagert werden können. Besonders vorteilhaft ist die Lagerung der schwenkbaren Halterung 7 zwischen den Schenkeln des U-Profils der Traverse 4. Damit kann die Halterung 7 beim Einbauen der Traverse zwischen den Rahmenprofilen 3 freischwenken und beim Eingreifen der Vorsprünge 6 in die Befestigungsöffnungen 5 dient das U-Profil der Traverse 4 als Anschlag für die Halterung 7.

## Patentansprüche

1. Schaltschrank (1) mit einem Rahmen (2), welcher vertikale Rahmenprofile (3) und zwischen den Rahmenprofilen (3) mindestens eine angeordnete Traverse (4) umfasst, wobei die Rahmenprofile (3) Befestigungsöffnungen (5) aufweisen, an denen die Traverse (4) befestigbar ist, wobei die Befestigungsöffnungen (5) auf einander zugewandte Seiten benachbarter Rahmenprofile (3) angeordnet sind und die Traverse (4) in einem eingebauten Zustand mit Vorsprüngen (6) in die Befestigungsöffnungen (5) eingreift, **dadurch gekennzeichnet, dass** an mindestens einem Ende der Traverse (4) eine um eine vertikale Achse (A) schwenkbare Halterung (7) vorgesehen ist, an welcher die Vorsprünge (6) angeordnet sind.

2. Schaltschrank (1) mit einem Rahmen (2) nach Anspruch 1, **dadurch gekennzeichnet, dass** die Befestigungsöffnungen (5) als Lochraster im Rahmenprofil (3) ausgebildet sind.

3. Schaltschrank (1) mit einem Rahmen (2) nach Anspruch 2, **dadurch gekennzeichnet, dass** an dem zweiten Ende der Traverse (4) eine starre Halterung (8) vorgesehen ist.

4. Schaltschrank (1) mit einem Rahmen (2) nach Anspruch 3, **dadurch gekennzeichnet, dass** die Halterungen (7,8) jeweils eine Bohrung (13) zur schwenkbaren Lagerung und eine mittlere Bohrung (14) zur starren Lagerung aufweisen.

5. Schaltschrank (1) mit einem Rahmen (2) nach Anspruch 4, **dadurch gekennzeichnet, dass** die Vorsprünge (6) hakenförmig ausgebildet sind.

6. Schaltschrank (1) mit einem Rahmen (2) nach Anspruch 5, **dadurch gekennzeichnet, dass** das freie Ende der hakenförmige Vorsprünge (6) im eingebauten Zustand der Traverse (4) ins Innere des Schaltschrankes (1) weist.

7. Schaltschrank (1) mit einem Rahmen (2) nach Anspruch 6, **dadurch gekennzeichnet, dass** die schwenkbare Halterung (7) im eingebauten Zustand gegen Verschwenken gesichert ist.

8. Schaltschrank (1) mit einem Rahmen (2) nach Anspruch 7, **dadurch gekennzeichnet, dass** in der Halterung (7) und in der Traverse (4) jeweils eine an der Schwenkachse (A) benachbarte Öffnung (10) vorgesehen ist, welche im eingebauten Zustand der Traverse fluchtend und in welche ein Sicherungsclips (9) eingesetzt ist.

9. Schaltschrank (1) mit einem Rahmen (2) nach Anspruch 8, **dadurch gekennzeichnet, dass** die Traverse (4) im Bereich der Halterung (7) als U-Profil ausgebildet ist.

10. Schaltschrank (1) mit einem Rahmen (2) nach Anspruch 9, **dadurch gekennzeichnet, dass** die schwenkbare Halterung (7) zwischen den Schenkeln des U-Profils der Traverse (4) schwenkbar gelagert ist.

11. Schaltschrank (1) mit einem Rahmen (2) nach Anspruch 9 oder 10, **dadurch gekennzeichnet, dass** der Verbindungssteg des U-Profils im eingebauten Zustand der Traverse (4) einen Anschlag gegen ein Verschwenken der Halterung (7) bildet.

## Claims

1. A switch cabinet (1) with a frame (2), which comprises vertical frame profiles (3) and at least one crossmember (4) arranged between the frame profiles (3), wherein the frame profiles (3) have fastening openings (5) on which the crossmember (4) is attachable, wherein the fastening openings (5) are arranged on mutually facing sides of adjacent frame profiles (3) and the crossmember (4) engages with projections (6) in the fastening openings (5), in the mounted state, **characterized in that** at least at one end of the crossmember (4), a bracket (7) is provided, which can be pivoted about a vertical axis (A) and on which the projections (6) are arranged.

2. The switch cabinet (1) with a frame (2) according to claim 1, **characterized in that** the fastening openings (5) are formed in the manner of a perforated grid in the frame profile (3).

3. The switch cabinet (1) with a frame (2) according to claim 2, **characterized in that** a rigid bracket (8) is provided at the second end of the crossmember (4).

4. The switch cabinet (1) with a frame (2) according to claim 3, **characterized in that** the brackets (7, 8) each have a bore (13) for pivotable mounting and a central bore (14) for rigid mounting.

5. The switch cabinet (1) with a frame (2) according to claim 4, **characterized in that** the projections (6) are hook-shaped.

6. The switch cabinet (1) with a frame (2) according to claim 5, **characterized in that** the free end of the hook-shaped projections (6) points into the interior of the switch cabinet (1) in the mounted state of the crossmember (4).

7. The switch cabinet (1) with a frame (2) according to claim 6, **characterized in that**, in the mounted state, the pivotable bracket (7) is secured against pivoting.

8. The switch cabinet (1) with a frame (2) according to claim 7, **characterized in that** an opening (10) adjacent to the pivot axis (A) is respectively provided in the bracket (7) and in the crossmember (4), is aligned in the mounted state of the crossmember and has a securing clip (9) inserted into it.

9. The switch cabinet (1) with a frame (2) according to claim 8, **characterized in that** the crossmember (4) is designed as a U-profile in the region of the bracket (7).

10. The switch cabinet (1) with a frame (2) according to claim 9, **characterized in that** the pivotable bracket (7) is pivotably mounted between the branches of the U-profile of the crossmember (4).

11. The switch cabinet (1) with a frame (2) according to claim 9 or 10, **characterized in that** the connecting web of the U-profile forms a stop against pivoting of the bracket (7), in the mounted state of the crossmember (4).

## Revendications

1. Armoire électrique (1) avec un cadre (2) qui comprend des profilés de cadre verticaux (3) et au moins une traverse (4) disposée entre les profilés de cadre (3), où les profilés de cadre (3) comportent des ouvertures de fixation (5) auxquelles la traverse (4) peut être fixée, où les ouvertures de fixation (5) sont disposées sur des côtés se faisant face de profilés de cadre adjacents (3) et la traverse (4) s'engage avec des saillies (6) dans les ouvertures de fixation (5) à l'état monté, **caractérisé en ce qu'**à au moins une extrémité de la traverse (4) est prévu un support (7) qui peut pivoter autour d'un axe vertical (A) et sur lequel les saillies (6) sont disposées.

2. Armoire électrique (1) avec un cadre (2) selon la revendication 1, **caractérisée en ce que** les ouvertures de fixation (5) sont réalisées sous la forme d'une grille perforée dans le profilé de cadre (3).

3. Armoire électrique (1) avec un cadre (2) selon la revendication 2, **caractérisée en ce qu'**un support rigide (8) est prévu à la deuxième extrémité de la traverse (4).

4. Armoire électrique (1) avec un cadre (2) selon la revendication 3, **caractérisée en ce que** les supports (7, 8) comportent chacun un trou foré (13) pour un montage pivotant et un trou foré central (14) pour un montage rigide.

5. Armoire électrique (1) avec un cadre (2) selon la revendication 4, **caractérisée en ce que** les saillies (6) sont en forme de crochet.

6. Armoire électrique (1) avec un cadre (2) selon la revendication 5, **caractérisée en ce que** l'extrémité libre des saillies (6) en forme de crochet est dirigée vers l'intérieur de l'armoire électrique (1) à l'état monté de la traverse (4).

7. Armoire électrique (1) avec un cadre (2) selon la revendication 6, **caractérisée en ce que** le support pivotant (7) est protégé contre le pivotement à l'état monté.

8. Armoire électrique (1) avec un cadre (2) selon la revendication 7, **caractérisée en ce qu'**une ouverture (10) adjacente à l'axe de pivotement (A) est prévue respectivement dans le support (7) et dans la traverse (4), laquelle ouverture (10) est alignée à l'état monté de la traverse et dans laquelle un clip de fixation (9) est inséré.

9. Armoire électrique (1) avec un cadre (2) selon la revendication 8, **caractérisée en ce que** la traverse (4) est réalisée sous forme de profilé en U dans la zone du support (7).

10. Armoire électrique (1) avec un cadre (2) selon la revendication 9, **caractérisée en ce que** le support pivotant (7) est monté de manière pivotante entre les branches du profilé en U de la traverse (4).

11. Armoire électrique (1) avec un cadre (2) selon la revendication 9 ou 10, **caractérisée en ce que** la branche de jonction du profilé en U forme une butée à l'état monté de la traverse (4) contre un pivotement du support (7).
